# EUROPEAN PATENT APPLICATION

(11) **EP 3 951 644 A1**
(43) Date of publication of application: **09.02.2022**
(21) Application number: 20189615.6
(22) Date of filing: 05.08.2020
(51) Int. Cl.: G06K 9/00, G06K 9/46

(54) **DEVICE AND METHOD FOR DETECTING FOREIGN OBJECT DEBRIS**

(71) Applicant: Robert Bosch GmbH, 70442 Stuttgart (DE)
(72) Inventor: Tay, Ivan, Singapore 521622 (SG); Yan, Wai, Singapore 575569 (SG); Ong, Jason, Singapore 670164 (SG); Friedrichs, Thomas, Singapore 348226 (SG)

(57) **Abstract**

According to various embodiments, a foreign object debris detection system (400) is described comprising a camera controller (403) configured to control a camera arrangement comprising one or more cameras (402) to take first digital images of an airport runway or taxiway, a detector (404) configured to detect a possible foreign object debris object on the runway or taxiway using the first digital images, wherein the camera controller is configured to control the camera arrangement to take one or more second digital images at a higher level of detail than the first digital images of the possible foreign object debris object when the detector has detected a possible foreign object debris object and a classifier (405) configured to classify the possible foreign object debris object using the one or more second digital images by a neural network (406), wherein the foreign object debris detection system is configured to output an alarm signal in case the classifier classifies the possible foreign object debris object as foreign object debris.

## Description

The present disclosure relates to devices, and methods for detecting foreign object debris.

Foreign Object Debris (FOD) on aircraft runway or taxiways causes huge costs for the aerospace industry. While runway or taxiways may be covered using radar and close up (short range) cameras to detect FODs, this typically requires many cameras and radars to scan the entire runway or taxiway (including taxiway) resulting in high initial cost and maintenance. Therefore, efficient approaches for detecting foreign object debris on airport runway or taxiways are desirable. Furthermore, it is desirable that these approaches have a low false positive rate since false positives resulting in the requirement for tedious human validation.

According to various embodiments, a foreign object debris detection system is provided comprising a camera controller configured to control a camera arrangement comprising one or more cameras to take first digital images of an airport runway or taxiway, a detector configured to detect a possible foreign object debris object on the runway or taxiway using the first digital images, wherein the camera controller is configured to control the camera arrangement to take one or more second digital images at a higher level of detail than the first digital images of the possible foreign object debris object when the detector has detected a possible foreign object debris object and a classifier configured to classify the possible foreign object debris object using the one or more second digital images by a neural network, wherein the foreign object debris detection system is configured to output an alarm signal in case the classifier classifies the possible foreign object debris object as foreign object debris.

The foreign object debris detection system described above covering a big area, i.e. a high length of runway and/or taxiway (by using the first digital images) while ensuring a reliable detection since suspicious objects are investigated in more detail by using the second digital images.

In the following, various examples are given.
Example 1 is the foreign object debris detection system as described above.
Example 2 is the foreign object debris detection system of Example 1, wherein the detector is configured to detect the possible foreign object debris object by feeding the first digital images as input images to the neural network or a further neural network, wherein the neural network or further neural network is a neural network trained to determine bounding boxes for objects in input images and to classify objects in input images.
Using a neural network allows efficient detection of suspicious objects. The same neural network which is used for analyzing the second digital images may be used for the first digital images to save storage or two neural networks may be used to achieve higher detection accuracy, i.e. to have a respective neural network adapted to the respective analyzation task.
Example 3 is the foreign object debris detection system of Example 1 or 2, wherein the camera controller is configured to output a request signal for human inspection in case the classifier does not classify the possible foreign object debris object as foreign object debris unless it classifies the object as harmless object.
   Thus, safety can be ensured in case the classifier is uncertain about the suspicious object.
Example 4 is the foreign object debris detection system of any one of Examples 1 to 3, wherein the neural network is a neural network trained to determine bounding boxes for objects in input images and the camera controller is configured to indicate the locations of objects on the runway or taxiway using the bounding boxes.
   This in particular allows ease of further inspection of the objects.
Example 5 is the foreign object debris detection system of any one of Examples 1 to 4, wherein the neural network comprises a convolutional neural network configured to generate a feature map for an input image, a region proposal network configured to generate a region-of-interest projection of the feature map, a region-of-interest pooling configured to receive the feature map and the region-of-interest projection as input and a fully connected layer arrangement configured to perform object classification using the output of the region-of-interest pooling.
Example 6 is the foreign object debris detection system of Example 5, wherein the fully connected layer arrangement is further configured to perform bounding box regression for one or more objects in the input image using the output of the region-of-interest pooling.
   A neural network architecture as described above allows reliable detection of FOD.
Example 7 is the foreign object debris detection system of any one of Examples 1 to 6, further comprising a communication interface configured to receive a specification of the neural network from a neural network training device.
   The neural network may for example centrally trained and distributed to multiple foreign object debris detection systems. Thus, training may be efficiently performed in, e.g., a central location without the need for local training.
Example 8 is the foreign object debris detection system of Example 7, comprising an airport traffic controller configured to stop plane traffic on the runway or taxiway in response to the alarm signal. Alternatively or in addition, the airport traffic controller may be configured to provide a recommendation to airport personnel to stop plane traffic.
   Accidents may thus be avoided.
Example 9 is a method for detecting foreign object debris on an airport runway or taxiway comprising taking first digital images of an airport runway or taxiway, detecting a possible foreign object debris object on the runway or taxiway using the first digital images, taking one or more second digital images at a higher level of detail than the first digital images of the possible foreign object debris object when a possible foreign object debris object has been detected, classifying the possible foreign object debris object using the one or more second digital images by a neural network and outputting an alarm signal in case the classifier classifies the possible foreign object debris object as foreign object debris.
Example 10 is the method of Example 9, further comprising training the neural network for object classification into foreign object debris and non-foreign object debris.
Example 11 is a computer program comprising instructions which, when executed by a processor, makes the processor perform a method according to Example 9 or Example 10.
Example 12 is a computer readable medium storing instructions which, when executed by a processor, makes the processor perform a method according to Example 9 or Example 10.

In the drawings, similar reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows an airport runway or taxiway with a foreign object debris detection system according to an embodiment;
- Figure 2: shows a neural network;
- Figure 3: illustrates the construction of a training data set for training the neural network of figure 2; and
- Figure 4: shows a foreign object debris detection system according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

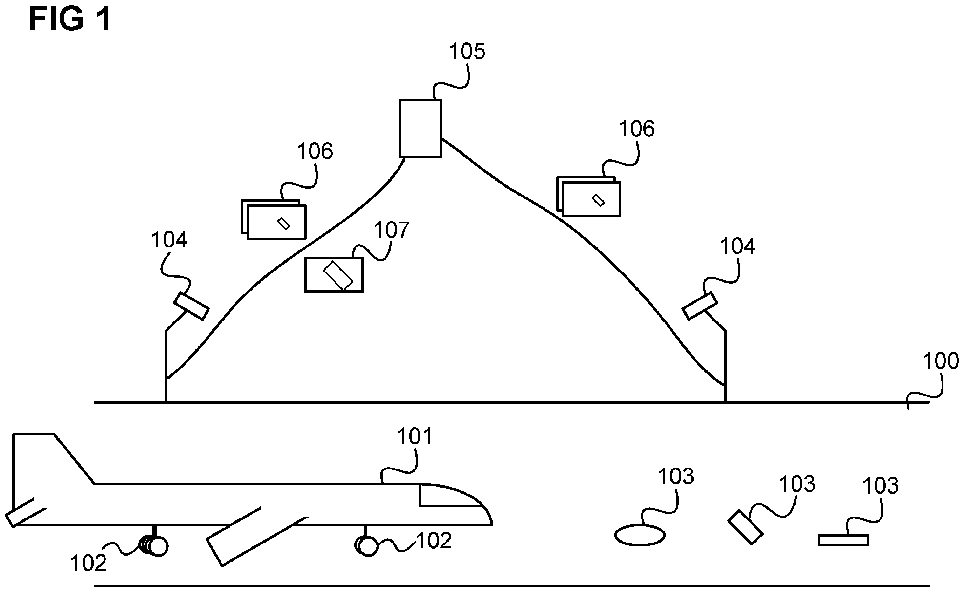

Figure 1 shows an airport runway or taxiway 100 with a foreign object debris detection system according to an embodiment.

The airport runway or taxiway 100 is a runway or taxiway used by airplanes for taking off, landing or taxiing. In the present example, an airplane 101 is moving on its wheels over the runway or taxiway 102. There may be objects 103, denoted as foreign object debris (FOD), on the runway or taxiway which, when the airplane 101 rolls over one or more of them, may damage the airplane's wheels and lead to delays or, depending on the speed of the plane, severe accidents.

FOD 103 refers to any article or substance, alien to an aircraft 101 (or generally to a certain system), which could potentially cause damage. FOD 103 at airports includes any object found in an inappropriate location that can potentially damage equipment or injure airplane or airport personnel. The resulting damage is estimated to (direct + indirect) cost the aerospace industry USD $13 billion a year. Airports, airlines, and airport tenants can reduce this cost by taking steps to prevent airport FOD. FOD 103 includes a wide range of material, including loose hardware, pavement fragments, catering supplies, building materials, rocks, sand, pieces of luggage, and even wildlife. FOD 103 is found at terminal gates, cargo aprons, taxiways, runway or taxiways, and run-up pads. It may cause damage through direct contact with airplanes 101, such as by cutting airplane tires 102 or being ingested into engines, or as a result of being thrown by jet blast and damaging airplanes or injuring people.

According to various embodiments, a FOD detection system is provided which comprises cameras 104 and a controlling and detection device (or arrangement of multiple devices) 105. The controlling and detection device controls the cameras 104 to scan the runway or taxiway continuously for FOD, for example at (camera-runway/taxiway) distances of 300m - 500m and height (camera above ground) of approximately 15m. For example a first camera may be 250-270 m away from the tar surface of a part of a runway or taxiway and cover a distance of 100 m (or more, depending on the limits of the camera(s) used) on the runway or taxiway and a second camera 104 may be 350 to 370 m away from another part of a runway or taxiway and also cover a distance of 100m on the runway or taxiway. An illuminator may be installed to provide light on the monitored runway or taxiway.

The control and detection device 105 implements a deep neural network for computer vision (e.g. a R-CNN (region convolutional neural network)) and implements a two-stage localization approach to manage the complexity of the FOD detection. The first stage is detection (of suspicious objects) and the second stage is identification (whether a suspicious object is a FOD object). While the cameras 104 are scanning the runway or taxiway they are using a predefined fixed zoom factor and generate first digital images 106 of the runway or taxiway which they provide to the control and detection device 105. The control and detection device 105 analyzes the first digital images 105 to check whether there is FOD 103 shown on the first digital pictures. If, the control and detection device 105 detects FOD 103 in the first digital images (i.e. the digital pictures recorded at the predefined fixed zoom factor) the control and detection device 105 sends out an alarm signal.

However, if the control and detection device 105 detects a suspicious object (which it cannot classify as FOD but which it classifies as suspicious), it controls one or more respective cameras 104 (i.e. one or more cameras 104 in whose field-of-view the suspicious object is located, i.e. which have generated a first digital image showing the suspicious object) to stop scanning and to zoom into the region of the suspicious object and to generate one or more second digital images 107 which a close-up of the suspicious object either using hardware or software approach or both. The control and detection device 105 then attempts to classify the suspicious object from the one or more second digital images 107. If it resolves (i.e. identifies) the suspicious object as an FOD 103 it sends out an alarm signal. Else, it may send out a request to have a human review the suspicious object. The stage step is that the control and detection device 105 controls the cameras 104 to return to their original predefined fixed zoom factor and continue scanning from where they last stopped.

In response to the alarm signal, plane traffic on the runway or taxiway may be stopped. The FOD detection may thus protect against accidents.

For analyzing the first digital pictures 106 and the second digital pictures 107 the control and detection device 105 may feed them to a deep computer vision model which may be trained to approach the classification problem not merely from an object recognition perspective but also from a more effective material recognition perspective.

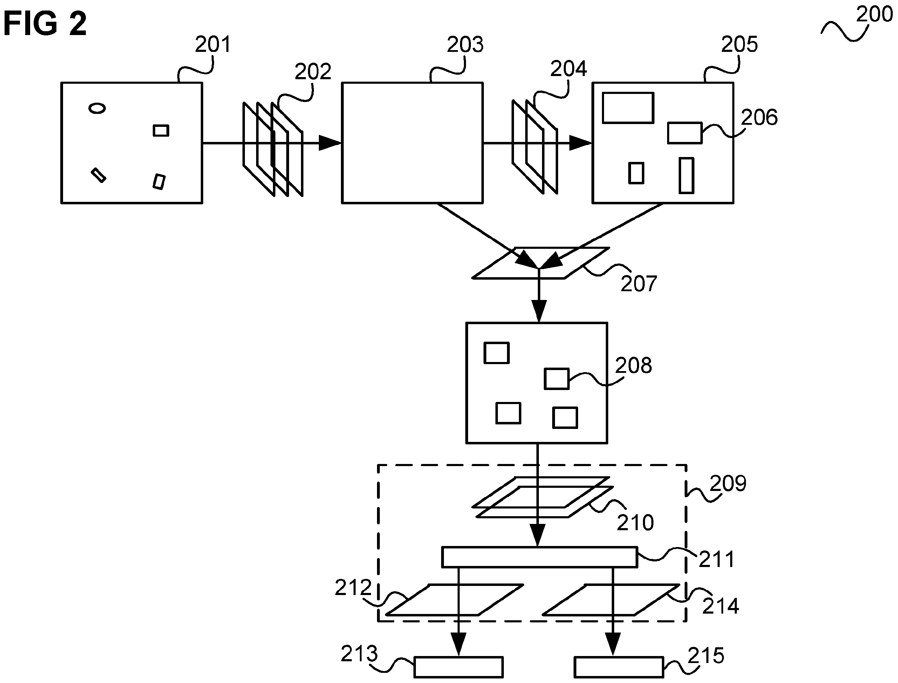

An example for a neural network (e.g. a Faster-RCNN (F-RCNN))that is implemented by the control and detection device 105 for detecting FODs in images is described in the following with reference to figure 2.

Figure 2 shows a neural network 200.

The neural network 200 receives an image 201 as input. The neural network 200 comprises a convolutional neural network 202 (e.g. an Inception-V2 Deep Convolutional Neural Network (e.g. Pre-trained Inception-V2 model)) which extracts a feature map 203 from the input image 201.

The neural network further comprises a region proposal network (RPN) 204 which receives the feature map 203 as input and provides a ROI (region-of-interest) projection 205 (which includes proposals 206 for locations of objects in the image).

The feature map 203 and the ROI projection 205 are fed to a ROI pooling layer 207.

The ROI pooling layer 207 brings all the object location proposals 206 to the same size, i.e. generates a fixed-size pooled feature map section 208 for each object location proposal 206 from the section of the features map 205 defined by the object location proposal 206.

Each fixed-size pooled feature map section 208 is fed to an arrangement of fully connected layers 209 in order to classify the content of the fixed-size pooled feature map section 208 and to predict the bounding box of the content (e.g. the bounding box of an object). The neural network 200 thus works as a classifier of objects in the input image (e.g. as FOD or not) and as a regressor to determine bounding boxes for the objects.

The arrangement of fully connected layers 209 may for example include a sequence of fully connected layers 210 receiving each fixed-size pooled feature map section 208 generating an output which may be seen as ROI feature vector 211 and then one or more classification fully connected layers 212 which output classification softmax values 213 and one or more regressor fully connected layers 214 which output a regression result (bounding box) 215.

Before being applied to FOD detection on the runway or taxiway 100 by the controlling and detection device 105 the neural network 200 is trained. This means that the values of parameters (in particular the weights of the neural network 200) are determined such that the neural network 200 may perform the classification and regression task.

It should be noted that the convolutional neural network 202 may be pre-trained and in a training phase, only the parameter values for the fully connected layers 209 are determined. According to another embodiment, the convolutional neural network 202 is trained in the training phase together with the fully connected layers 209.

In the training phase, the neural network parameters are determined by updating them using backpropagation with stochastic gradient descent. The process of backpropagation is repeated until the classification and regression losses fulfill predetermined minimization criteria.

The classification loss is given by difference between a Ground Truth Label for a location in the input image and the Predicted Label (given by the softmax values 213) for the location.

The bounding box regressor loss is given by the difference between the Ground Truth bounding box for a location in the input image and the Predicted bounding box coordinates for the location (given by the regressor result 215).

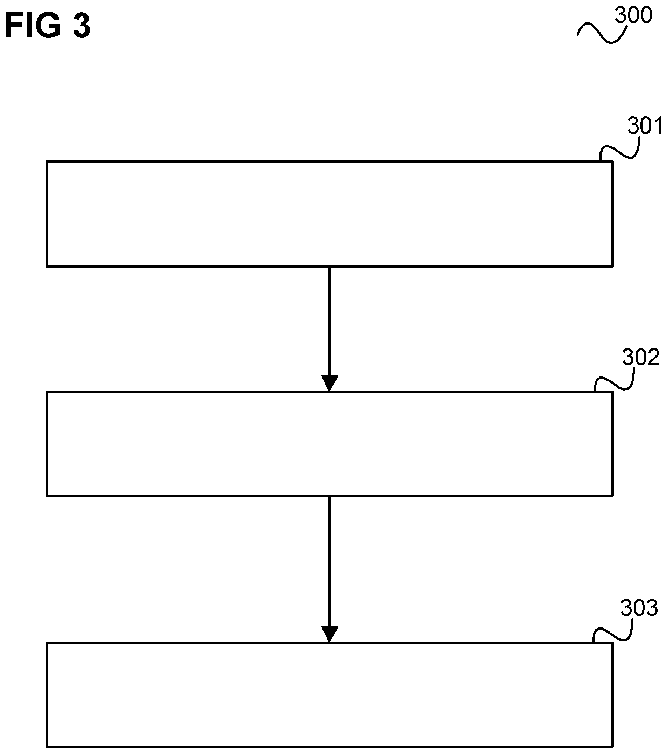

Figure 3 illustrates the construction of a training data set for training the neural network 200 of figure 2.

In 301, FODs on the runway 100 are recorded using a camera 104 at a certain resolution (e.g. 1920 x 1080) at different times of the day. These recordings (FOD footages) are collected as movies in 302 (e.g. as MOV files).

In 303, the movies are split into images (e.g. with two images extracted from a movie per second) to construct the images of the training dataset (e.g. as PNG files).

The training dataset for example contains 2000 images containing objects of 40 foreign object debris types (such as rubber, cables, wire, metal ring, iron chain, etc.,). The minimum size of the debris material contained in the dataset is for example 2cm (0.7 x 0.7 inches).

An image of the training dataset may contain one or more instances of objects (which may or may not be FOD objects). The objects inside the image are labeled (by ground truth class and ground truth bounding box).

For example, an object is given a label "FOD" and a bounding box in terms of values xₘᵢₙ, yₘᵢₙ, xₘₐₓ, yₘₐₓ and another object is given a label "runway light" and a bounding box in terms of values xₘᵢₙ, yₘᵢₙ, xₘₐₓ, yₘₐₓ.

The ground truth labels and bounding box (BB) coordinates of FOD objects inside the images may be manually annotated by human inspectors before training the neural network 200. The resulting training data set is then split into a training set for training the neural network 200 and a test set for evaluating the trained neural network. For example, 80% of the training data set is selected for training and the rest for performance evaluation purposes.

When the neural network 200 has been trained, it is stored in the controlling and detection device 105 for FOD detection (prediction phase). It should be noted that it is not required to have the detection device 105 as a dedicated device. It might be part of or integrated into the camera or using computational capacities in a cloud. The controlling and detection device 105 takes an input image to be analyzed from the first digital images 106 or the second digital images 107 passes it to the trained neural network 200 as input mage 201 which returns the predicted label of each object and the bounding boxes for the objects in the image.

It should be noted that the same neural network 200 may be used for analyzing the first digital images and the second digital images. Alternatively, two different variants of the neural network are trained and used. For example, a first variant is trained on images where objects are shown with lower zooming factor and a second variant is trained on images where objects are shown with a higher zooming factor (and, for example, only one object is contained in each image). The first version may then be used for object detection using the one or more first images and, if the first version classifies and object as FOD, a second image zoomed in on the object may be fed to the second variant to get a more reliable classification.

As mentioned above, the neural network 200 may be trained remotely from the controlling and detection device 105. For example, the neural network 200 is trained on a cloud (offering corresponding API services) and the trained neural network (inference model) is pushed to the respective physical location (where the controlling and detection device 105 is provided). With its local copy of the neural network 200 the controlling and detection device 105 analyzes the live camera footages and provides inference results using the localized bounding boxes around the FOD objects. The neural network 200 may also output a confidence score for the FOD classification and the bounding boxes. The controlling and detection device 105 may be implemented by means of a computer with a general-purpose processor.

New data footages of FODs may be fed back to the cloud for further training of the neural network 200 to improve the FOD detection. An updated model (updated neural network) may then be pushed back to the controlling and detection device 105 (e.g. to a local airport computer) for FOD detection. Thus, the version of the neural network in the cloud is a master model that may be constantly improved from many labelled data samples feedback across many airports. New FOD detection functionality can then be made available in the future such as animal, vehicle, drone detection and consumed by airports as a service.

Alternatively, provided the controlling and detection device 105 has enough computational capacity the neural network 200 may also be trained locally in the controlling and detection device 105.

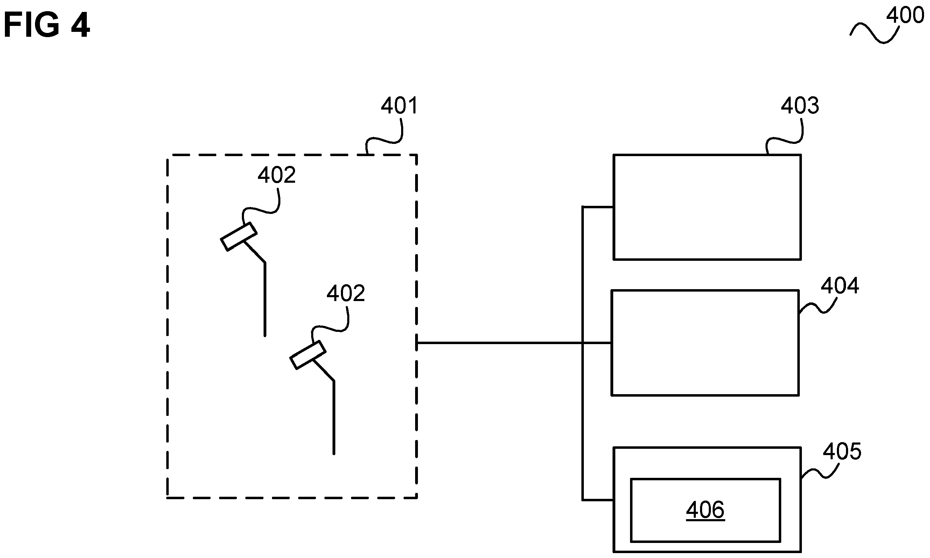

In summary, according to various embodiments, a foreign object debris detection system is provided as illustrated in figure 4.

Figure 4 shows a foreign object debris detection system 400 according to an embodiment.

The foreign object debris detection system comprises controller 403 configured to control a camera arrangement 401 comprising one or more cameras 402 to take first digital images of an airport runway or taxiway.

The foreign object debris detection system 400 further comprises a detector 404 configured to detect a possible foreign object debris object on the runway or taxiway using the first digital images.

The camera controller 403 is configured to control the camera arrangement 401 to take one or more second digital images at a higher level of detail than the first digital images of the possible foreign object debris object when the detector 404 has detected a possible foreign object debris object.

The foreign object debris detection system 400 further comprises a classifier 405 configured to classify the possible foreign object debris object using the one or more second digital images by a neural network 406.

The foreign object debris detection system 400 is configured to output an alarm signal in case the classifier classifies the possible foreign object debris object as foreign object debris.

According to various embodiments, in other words, an airport runway or taxiway is roughly scanned (e.g. first images are taken covering a large area) and when a suspicious object is detected (by means of a neural network or by other means, e.g. using another type of image analysis searching for suspicious patterns), a more accurate picture of the suspicious object is taken and analysed by means of a neural network.

The one or more second digital images of the possible foreign object debris object being taken at a higher level of detail may mean that the possible foreign object debris object is shown in the second digital images at a higher resolution than in the first digital images, for example by zooming in on the possible foreign object debris object in between taking the first digital images and taking the one or more second digital images. Other quality factors may also be enhanced, for example, a camera of the camera arrangement may be controlled to focus on the possible foreign object debris object to take the one or more second digital images or the colour depth may be increased before taking the one or more second digital images.

The components of the system of figure 4 (in particular the camera controller, the detector and the classifier) may be implement by one or more computers including one or more data processing units. The term "data processing unit" can be understood as any type of entity that allows the processing of data or signals. For example, the data or signals may be treated according to at least one (i.e., one or more than one) specific function performed by the data processing unit. A data processing unit may include an analogue circuit, a digital circuit, a composite signal circuit, a logic circuit, a microprocessor, a micro controller, a central processing unit (CPU), a graphics processing unit (GPU), a digital signal processor (DSP), a programmable gate array (FPGA) integrated circuit or any combination thereof or be formed from it. Any other way of implementing the respective functions, which will be described in more detail below, may also be understood as data processing unit or logic circuitry. It will be understood that one or more of the method steps described in detail herein may be executed (e.g., implemented) by a data processing unit through one or more specific functions performed by the data processing unit. The camera controller, the detector and the classifier may for example be implemented by a detection and controlling device such as a computer. The detection and controlling device comprises a memory storing a specification of the neural network.

The neural network regresses and classifies data. The term classification is understood to include semantic segmentation, e.g. of an image (which can be regarded as pixel-by-pixel classification).

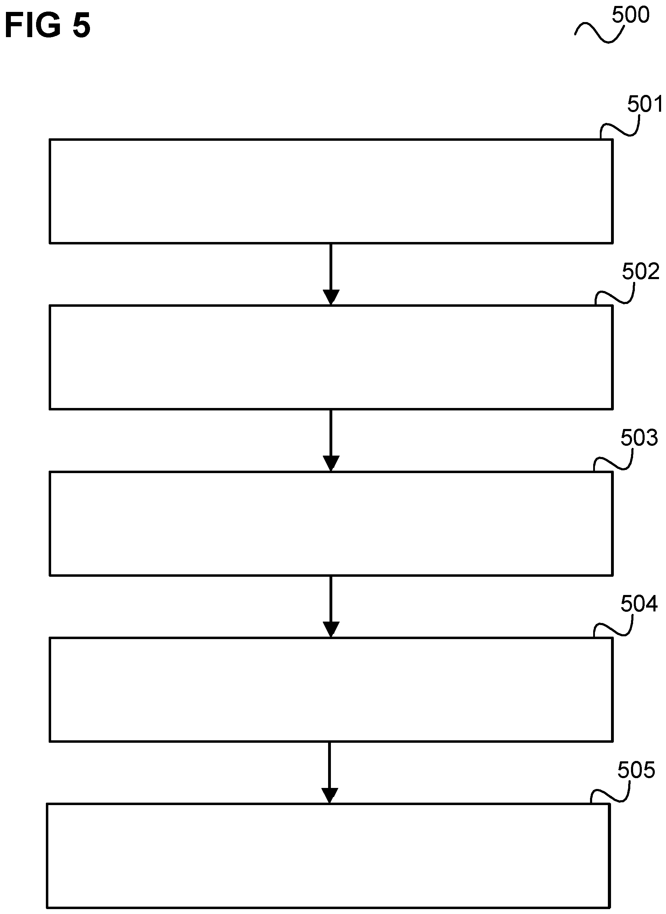

According to one embodiment, a method is provided as illustrated in figure 5.

Figure 5 shows a flow diagram 500 illustrating a method for detecting foreign object debris on an airport runway or taxiway.

In 501, first digital images of an airport runway or taxiway are taken.

In 502, a possible foreign object debris object on the runway or taxiway is detected using the first digital images.

In 503, one or more second digital images at a higher level of detail than the first digital images of the possible foreign object debris object are taken when a possible foreign object debris object has been detected.

In 504, the possible foreign object debris object is classified using the one or more second digital images by a neural network.

In 505, an alarm signal is output in case the classifier classifies the possible foreign object debris object as foreign object debris.

It should be noted that embodiments described in context with the foreign object debris detection system are analogously valid for the method for detecting foreign object debris on an airport runway or taxiway.

Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the claims and the equivalents thereof.

## Claims

1. A foreign object debris detection system comprising
a camera controller configured to control a camera arrangement comprising one or more cameras to take first digital images of an airport runway or taxiway;
a detector configured to detect a possible foreign object debris object on the runway or taxiway using the first digital images;
wherein the camera controller is configured to control the camera arrangement to take one or more second digital images at a higher level of detail than the first digital images of the possible foreign object debris object when the detector has detected a possible foreign object debris object; and
a classifier configured to classify the possible foreign object debris object using the one or more second digital images by a neural network;
wherein the foreign object debris detection system is configured to output an alarm signal in case the classifier classifies the possible foreign object debris object as foreign object debris.

2. The foreign object debris detection system of claim 1, wherein the detector is configured to detect the possible foreign object debris object by feeding the first digital images as input images to the neural network or a further neural network, wherein the neural network or further neural network is a neural network trained to determine bounding boxes for objects in input images and to classify objects in input images.

3. The foreign object debris detection system of claim 1 or 2, wherein the camera controller is configured to output a request signal for human inspection in case the classifier does not classify the possible foreign object debris object as foreign object debris unless it classifies the object as harmless object.

4. The foreign object debris detection system of any one of claims 1 to 3,
wherein the neural network is a neural network trained to determine bounding boxes for objects in input images and the camera controller is configured to indicate the locations of objects on the runway or taxiway using the bounding boxes.

5. The foreign object debris detection system of any one of claims 1 to 4,
wherein the neural network comprises a convolutional neural network configured to generate a feature map for an input image, a region proposal network configured to generate a region-of-interest projection of the feature map, a region-of-interest pooling configured to receive the feature map and the region-of-interest projection as input and a fully connected layer arrangement configured to perform object classification using the output of the region-of-interest pooling.

6. The foreign object debris detection system of claim 5, wherein the fully connected layer arrangement is further configured to perform bounding box regression for one or more objects in the input image using the output of the region-of-interest pooling.

7. The foreign object debris detection system of any one of claims 1 to 6, further comprising a communication interface configured to receive a specification of the neural network from a neural network training device.

8. The foreign object debris detection system of claim 7, comprising an airport traffic controller configured to stop plane traffic on the runway or taxiway in response to the alarm signal.

9. A method for detecting foreign object debris on an airport runway or taxiway comprising
taking first digital images of an airport runway or taxiway detecting a possible foreign object debris object on the runway or taxiway using the first digital images;
taking one or more second digital images at a higher level of detail than the first digital images of the possible foreign object debris object when a possible foreign object debris object has been detected;
classifying the possible foreign object debris object using the one or more second digital images by a neural network; and
outputting an alarm signal in case the classifier classifies the possible foreign object debris object as foreign object debris.

10. The method of claim 9, further comprising training the neural network for object classification into foreign object debris and non-foreign object debris.

11. Computer program comprising instructions which, when executed by a processor, makes the processor perform a method according to claim 9 or 10.

12. Computer readable medium storing instructions which, when executed by a processor, makes the processor perform a method according to claim 9 or 10.
